# EUROPEAN PATENT APPLICATION

(11) **EP 4 368 889 A2**
(43) Date of publication of application: **15.05.2024**
(21) Application number: 23209542.2
(22) Date of filing: 13.11.2023
(51) Int. Cl.: F23R 3/14, F23R 3/28

(54) **FUEL INJECTOR ASSEMBLY FOR GAS TURBINE ENGINE**

(30) Priority: 13.11.2022 US 202217985863
(71) Applicant: RTX Corporation, Farmington, CT 06032 (US)
(72) Inventor: DAI, Zhongtao, West Hartford, 06107 (US); KIM, Wookyung, Glastonbury, 06033 (US); KRAMER, Stephen K., Cromwell, 06416 (US); SEN, Baris A., S. Glastonbury, 06073 (US); DILLARD, Gary J., Gainesville, 32608 (US)
(74) Representative: Dehns

(57) **Abstract**

An assembly is provided for a gas turbine engine (20). This engine assembly includes a fuel injector assembly (62), and the fuel injector assembly (62) includes a fuel swirler (122) and an air swirler (88). The fuel swirler (122) is configured to swirl fuel in a direction about the axis (72) to provide swirled fuel. The fuel injector assembly (62) is configured to inject the swirled fuel as an annular fuel flow along an axis (72). The air swirler (88) is configured to swirl air in the direction about the axis (72) to provide swirled air. The fuel injector assembly (62) is configured to inject the swirled air as an annular air flow along the axis (72), adjacent and circumscribing the annular fuel flow.

## Description

### BACKGROUND OF THE DISCLOSURE

### 1. Technical Field

This disclosure relates generally to a gas turbine engine and, more particularly, to a fuel injector assembly for the gas turbine engine.

### 2. Background Information

Various types and configurations of fuel injector assemblies are known in the art. Some of these known fuel injector assemblies include an air swirler mated with a fuel injector nozzle. While these known fuel injector assemblies have various advantages, there is still room in the art for improvement particularly when used with fast burning fuels such as hydrogen fuel.

### SUMMARY OF THE DISCLOSURE

According to an aspect of the present disclosure, an assembly is provided for a gas turbine engine. This engine assembly includes a fuel injector assembly, and the fuel injector assembly includes a fuel swirler and an air swirler. The fuel swirler is configured to swirl fuel in a direction about the axis to provide swirled fuel. The fuel injector assembly is configured to inject the swirled fuel as an annular fuel flow along an axis. The air swirler is configured to swirl air in the direction about the axis to provide swirled air. The fuel injector assembly is configured to inject the swirled air as an annular air flow along the axis, adjacent and circumscribing the annular fuel flow.

According to another aspect of the present disclosure, an apparatus is provided for a gas turbine engine. This engine apparatus includes a fuel injector nozzle, and the fuel injector nozzle includes an inner nozzle passage, an outer nozzle passage and a fuel swirler within the outer nozzle passage. The inner nozzle passage extends along an axis to an inner nozzle outlet at a distal end of the fuel injector nozzle. The fuel injector nozzle is configured to direct inner fuel out of the inner nozzle passage through the inner nozzle outlet as an inner fuel flow along the axis. The outer nozzle passage extends along the axis to an outer nozzle outlet at the distal end of the fuel injector nozzle. The fuel injector nozzle is configured to direct outer fuel swirled by the fuel swirler out of the outer nozzle passage through the outer nozzle outlet as an outer fuel flow along the axis, adjacent and circumscribing the inner fuel flow.

According to still another aspect of the present disclosure, a method is provided for operating a combustor assembly of a gas turbine engine. During this method, fuel is swirled in a direction about an axis to provide swirled fuel. The swirled fuel is injected into a combustion chamber as an annular fuel flow along the axis. Air is swirled in the direction about the axis to provide swirled air. The swirled air is injected into the combustion chamber as an annular air flow along the axis. The annular air flow is adjacent and radially outboard of the annular fuel flow.

A swirl trajectory of the swirled fuel in the annular fuel flow may match a swirl trajectory of the swirled air in the annular air flow. In addition or alternatively, a swirl velocity of the swirled fuel in the annular fuel flow may be within at least thirty percent of a swirl velocity of the swirled air in the annular air flow.

The fuel injector assembly may be configured such that a swirl trajectory of the swirled fuel in the annular fuel flow matches a swirl trajectory of the swirled air in the annular air flow.

The fuel injector assembly may be configured such that a swirl velocity of the swirled fuel in the annular fuel flow is within at least thirty percent of a swirl velocity of the swirled air in the annular air flow.

The fuel swirler may be configured as or otherwise include an axial fuel swirler.

The fuel injector assembly may also include an inner nozzle wall and an outer nozzle wall circumscribing the inner nozzle wall. The fuel swirler may include a plurality of fuel swirler vanes arranged circumferentially about the axis. Each of the fuel swirler vanes may extend radially from the inner nozzle wall to the outer nozzle wall.

A camber line of a first of the fuel swirler vanes may be straight.

At least a portion of a camber line of a first of the fuel swirler vanes may be curved.

The air swirler may be configured as or otherwise include a radial air swirler.

The air swirler may be configured as or otherwise include an axial air swirler.

The fuel injector assembly may also include a first swirler wall and a second swirler wall. The air swirler may include a plurality of air swirler vanes arranged circumferentially about the axis. Each of the air swirler vanes may extend axially from the first swirler wall to the second swirler wall.

The fuel injector assembly may also be configured to inject a second fuel flow along the axis. The annular fuel flow may be adjacent and circumscribe the second fuel flow.

The fuel injector assembly may be configured to inject the second fuel flow without swirl.

The fuel injector assembly may also include an inner nozzle passage, an outer nozzle passage, an inner nozzle wall and an outer nozzle wall circumscribing the inner nozzle wall. The inner nozzle passage may be radially within the inner nozzle wall. The inner nozzle passage may extend axially along the inner nozzle wall to an inner nozzle outlet. The outer nozzle passage may be radially between the inner nozzle wall and the outer nozzle wall. The outer nozzle passage may extend axially along the inner nozzle wall and the outer nozzle wall, through the fuel swirler, to an outer nozzle outlet.

A distal end of the inner nozzle wall may be axially recessed from a distal end of the outer nozzle wall.

The fuel injector assembly may also include a flow regulator at an upstream end of the inner nozzle passage.

The fuel injector assembly may also include an endwall connected to the inner nozzle wall at an upstream end of the inner nozzle passage. The endwall may include one or more perforations fluidly coupled to the inner nozzle passage.

The assembly may also include a hydrogen fuel source configured to provide the fuel to the fuel injector assembly such that the fuel swirled by the fuel swirler is hydrogen fuel.

The assembly may also include a compressor section configured to provide the air to the fuel injector assembly such that the air swirled by the air swirler is compressed air.

The apparatus may also include a fuel injector assembly including the fuel injector nozzle and an air swirler. The fuel swirler may be configured to swirl fuel in a direction about the axis within the outer nozzle passage. The air swirler may be configured to swirl air in the direction about the axis to provide swirled air. The fuel injector assembly may be configured to inject the swirled air as an air flow along the axis, adjacent and circumscribing the outer fuel flow.

The fuel injector nozzle may also include an inner nozzle wall and an outer nozzle wall circumscribing the inner nozzle wall. The inner nozzle wall may form an outer peripheral boundary of the inner nozzle passage to the inner nozzle outlet. The inner nozzle wall may form an inner peripheral boundary of the outer nozzle passage. The outer nozzle wall may form an outer peripheral boundary of the outer nozzle passage to the outer nozzle outlet. The fuel swirler may include a plurality of fuel swirler vanes arranged circumferentially about the axis. Each of the fuel swirler vanes may extend radially across outer nozzle passage.

The fuel injector nozzle may also include a fuel manifold passage and an endwall between the fuel manifold passage and the inner nozzle passage. One or more perforations may extend axially through the endwall fluidly coupling the fuel manifold passage to the inner nozzle passage.

The apparatus may also include a hydrogen fuel source configured to provide the inner fuel and the outer fuel to the fuel injector nozzle.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a side cutaway illustration of a geared gas turbine engine.
FIG. 2 is a partial side sectional illustration of a combustor with a fuel injector assembly.
FIG. 3 is a partial side sectional illustration of the fuel injector assembly of FIG. 2.
FIG. 4 is a cross-sectional illustration of an air swirler assembly through an air swirler.
FIG. 5 is a cross-sectional illustration of an injector nozzle adjacent a fuel swirler.
FIG. 6 is a partial side sectional illustration of the fuel injector assembly of FIG. 2 coupled to a single fuel circuit.
FIGS. 7A and 7B are perspective illustrations of a portion of the injector nozzle with various perforated endwall arrangements.
FIG. 8 is a partial side sectional illustration of the fuel injector assembly of FIG. 2 coupled to multiple fuel circuits.
FIGS. 9A-C are plan view illustrations of various fuel swirler vane configurations.
FIG. 10 is a perspective illustration of a portion of the injector nozzle with helical fuel swirler vanes.
FIG. 11 is a partial side sectional illustration of the fuel injector assembly of FIG. 2 configured with an additional air swirler.
FIGS. 12A-C are partial side sectional illustrations of the fuel injector assembly with various interfaces between an injector mount and an outer nozzle wall.
FIG. 13 is a cutaway perspective illustration of the fuel injector assembly with an axial air swirler.

### DETAILED DESCRIPTION

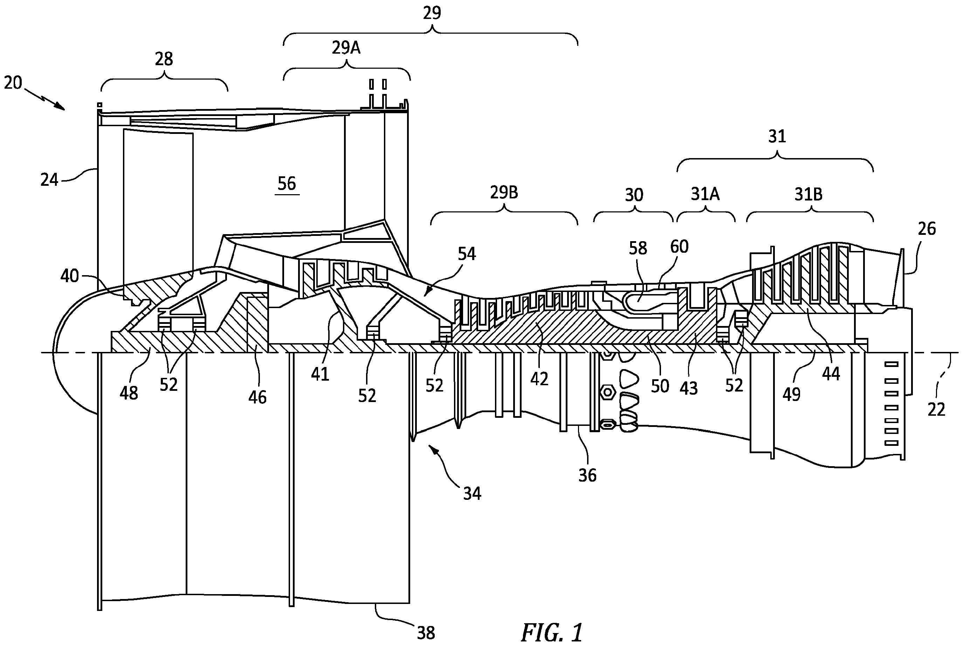

FIG. 1 is a side cutaway illustration of a geared gas turbine engine 20. This gas turbine engine 20 extends along an axial centerline 22 between an upstream airflow inlet 24 and a downstream airflow exhaust 26. The gas turbine engine 20 includes a fan section 28, a compressor section 29, a combustor section 30 and a turbine section 31. The compressor section 29 includes a low pressure compressor (LPC) section 29A and a high pressure compressor (HPC) section 29B. The turbine section 31 includes a high pressure turbine (HPT) section 31A and a low pressure turbine (LPT) section 31B.

The engine sections 28-31B are arranged sequentially along the axial centerline 22 within an engine housing 34. This engine housing 34 includes an inner case 36 (e.g., a core case) and an outer case 38 (e.g., a fan case). The inner case 36 may house one or more of the engine sections 29A, 29B, 30, 31A and 31B; e.g., a core of the gas turbine engine 20. The outer case 38 may house at least the fan section 28.

Each of the engine sections 28, 29A, 29B, 31A and 31B includes a respective bladed rotor 40-44. Each of these bladed rotors 40-44 includes a plurality of rotor blades arranged circumferentially around and connected to one or more respective rotor disks and/or hubs. The rotor blades, for example, may be formed integral with or mechanically fastened, welded, brazed, adhered and/or otherwise attached to the respective rotor disk(s) and/or the respective hub(s).

The fan rotor 40 is connected to a geartrain 46, for example, through a fan shaft 48. The geartrain 46 and the LPC rotor 41 are connected to and driven by the LPT rotor 44 through a low speed shaft 49. The HPC rotor 42 is connected to and driven by the HPT rotor 43 through a high speed shaft 50. The engine shafts 48-50 are rotatably supported by a plurality of bearings 52; e.g., rolling element and/or thrust bearings. Each of these bearings 52 is connected to the engine housing 34 by at least one stationary structure such as, for example, an annular support strut.

During engine operation, air enters the gas turbine engine 20 through the airflow inlet 24. This air is directed through the fan section 28 and into a core flowpath 54 and a bypass flowpath 56. The core flowpath 54 extends sequentially through the engine sections 29A-31B; e.g., the engine core. The air within the core flowpath 54 may be referred to as "core air". The bypass flowpath 56 extends through a bypass duct, and bypasses the engine core. The air within the bypass flowpath 56 may be referred to as "bypass air".

The core air is compressed by the LPC rotor 41 and the HPC rotor 42 and directed into a (e.g., annular) combustion chamber 58 of a (e.g., annular) combustor 60 in the combustor section 30. Fuel is injected into the combustion chamber 58 and mixed with the compressed core air to provide a fuel-air mixture. This fuel-air mixture is ignited and combustion products thereof flow through and sequentially cause the HPT rotor 43 and the LPT rotor 44 to rotate. The rotation of the HPT rotor 43 and the LPT rotor 44 respectively drive rotation of the HPC rotor 42 and the LPC rotor 41 and, thus, compression of the air received from an inlet to the core flowpath 54. The rotation of the LPT rotor 44 also drives rotation of the fan rotor 40, which propels bypass air through and out of the bypass flowpath 56. The propulsion of the bypass air may account for a majority of thrust generated by the gas turbine engine 20.

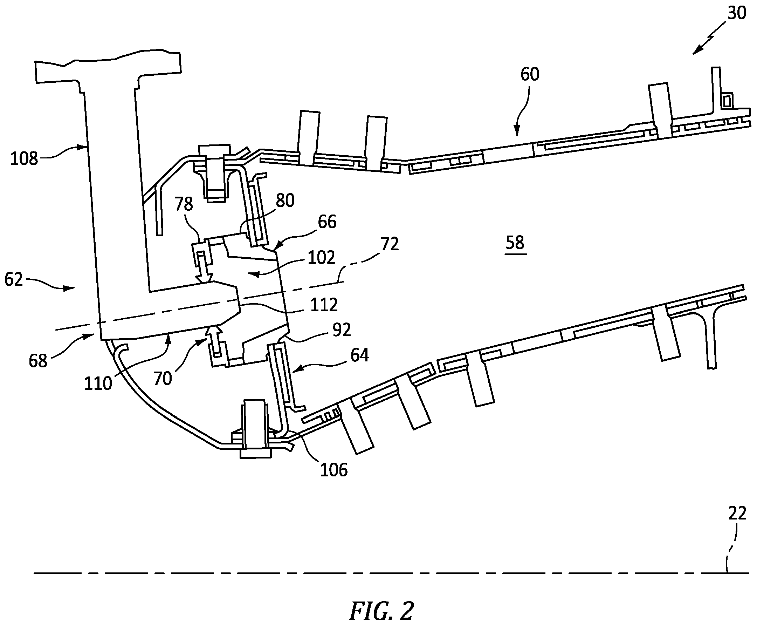

Referring to FIG. 2, the combustor section 30 includes a plurality of fuel injector assemblies 62 (one visible in FIG. 2) arranged circumferentially about the axial centerline 22 in a circular array. The fuel injector assemblies 62 are mounted to a (e.g., annular) bulkhead 64 of the combustor 60. The fuel injector assemblies 62 are configured to direct a mixture of fuel and compressed air into the combustion chamber 58 for combustion. Each fuel injector assembly 62 of FIG. 2 includes an air swirler assembly 66 and a fuel injector 68. The fuel injector assembly 62 may also include an injector mount 70 coupling the fuel injector 68 to the swirler assembly 66.

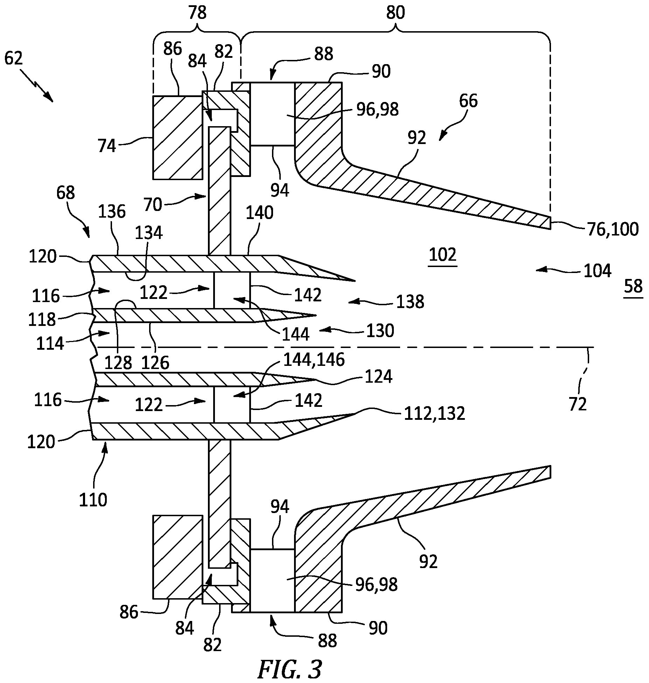

Referring to FIG. 3, the swirler assembly 66 extends circumferentially around an axis 72 (e.g., a centerline of the swirler assembly 66) providing the swirler assembly 66 with a full-hoop body. The swirler assembly 66 extends axially along the axis 72 from an upstream end 74 of the swirler assembly 66 to a downstream end 76 of the swirler assembly 66. The swirler assembly 66 may include a base section 78 and a swirler section 80.

The base section 78 is disposed at (e.g., on, adjacent or proximate) the swirler upstream end 74. This base section 78 may be configured as or otherwise include a first swirler wall 82; e.g., an annular upstream swirler wall. The base section 78 may also be configured to form a receptacle 84 (e.g., a slot, a channel, etc.) for the injector mount 70 at the swirler upstream end 74. The base section 78 of FIG. 3, for example, also includes a mounting plate 86 axially abutted against and attached to the first swirler wall 82. The receptacle 84 is formed at an inner periphery of the base section 78, axially between a (e.g., annular) surface of the first swirler wall 82 and a (e.g., annular) surface of the mounting plate 86. The receptacle 84 is configured to receive the injector mount 70, and (e.g., loosely) capture the injector mount 70 axially between the first swirler wall 82 and the mounting plate 86. This capturing of the injector mount 70 between the first swirler wall 82 and the mounting plate 86 may allow the injector mount 70 to radially float (e.g. shift) within the receptacle 84. This floating may in turn accommodate slight shifting between the swirler assembly 66 and the fuel injector 68 during gas turbine engine operation. Of course, various other techniques are known in the art for arranging and/or securing an injector mount with a swirler assembly, and the present disclosure is not limited to any particular ones thereof. Furthermore, it is contemplated the injector mount 70 may alternatively be fixed to the swirler assembly 66 where, for example, the swirler assembly 66 is operable to shift relative to the combustor bulkhead 64.

The swirler section 80 includes an air swirler 88 and a second swirler wall 90; e.g., an annular downstream swirler wall. The swirler section 80 of FIG. 3 also includes a swirler guide wall 92; e.g., a tubular funnel wall.

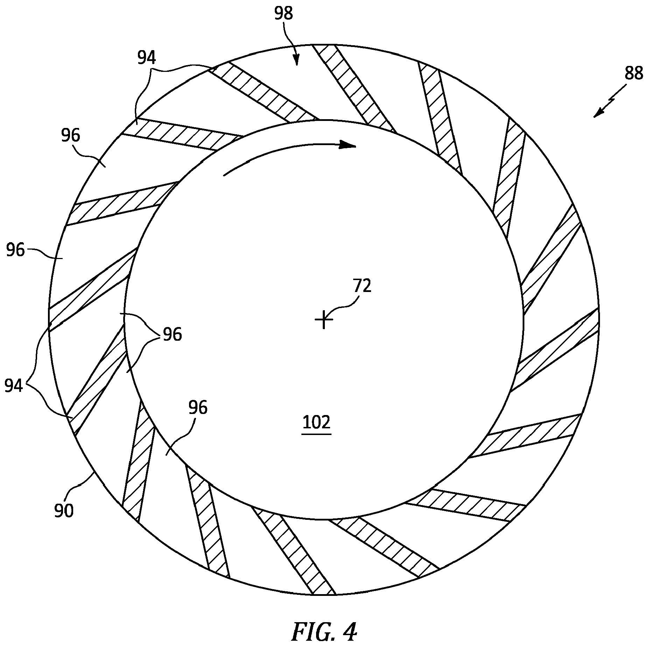

The air swirler 88 may be configured as a radial air swirler. The air swirler 88 of FIG. 3, for example, is arranged axially between and is connected to the first swirler wall 82 and the second swirler wall 90. The air swirler 88 of FIG. 4 includes a plurality of air swirler vanes 94. Each of these air swirler vanes 94 extends axially between and is connected to the first swirler wall 82 and the second swirler wall 90 (see FIG. 3). The air swirler vanes 94 are arranged circumferentially about the axis 72 in a circular array. Each of the air swirler vanes 94 is circumferentially separated from each circumferentially neighboring (e.g., adjacent) air swirler vane 94 by a respective air swirler channel 96; e.g., an air gap. Each air swirler channel 96 extends circumferentially between and to a respective circumferentially neighboring pair of the air swirler vanes 94. Each air swirler channel 96 extends axially between and to the first swirler wall 82 and the second swirler wall 90 (see FIG. 3). With this arrangement, the air swirler channels 96 collectively form an air swirler passage 98 radially through the air swirler 88, axially between the swirler walls 82 and 90 (see FIG. 3). The air swirler vanes 94 / the air swirler channels 96 are configured such that air passing through and out of the air swirler passage 98 is directed in a first circumferential direction (e.g., a clockwise direction, or alternatively a counterclockwise direction) about the axis 72. In other words, the air swirler vanes 94 / the air swirler channels 96 are operable to circumferentially swirl the air passing through the air swirler 88 in the first circumferential direction.

Referring to FIG. 3, the swirler guide wall 92 is disposed at the swirler downstream end 76. The swirler guide wall 92 of FIG. 3, for example, is connected to (and cantilevered from) the second swirler wall 90 at an inner end of the air swirler 88. This swirler guide wall 92 projects out from the second swirler wall 90 and extends axially along the axis 72 to a (e.g., downstream) distal end 100 of the swirler guide wall 92 at the swirler downstream end 76. As the swirler guide wall 92 extends towards (e.g., to) the swirler downstream end 76, the swirler guide wall 92 may (e.g., continuously or incrementally) radially taper inwards towards the axis 72. The swirler guide wall 92 may thereby have a tubular frustoconical geometry.

The swirler assembly 66 of FIG. 3 is further configured with an inner swirler passage 102. This inner swirler passage 102 is formed by an inner bore of the swirler assembly 66. An outer peripheral boundary of an upstream portion of the inner swirler passage 102, for example, may be formed by and radially within the base section 78 and its first swirler wall 82. An outer peripheral boundary of a downstream portion of the inner swirler passage 102 may be formed by and radially within the swirler section 80 and its swirler guide wall 92. The inner swirler passage 102 of FIG. 3 extends axially within the swirler assembly 66 from (or about) a side of the injector mount 70 to an inner swirler outlet 104 (e.g., an outlet orifice) at the swirler downstream end 76.

Referring to FIG. 2, the swirler assembly 66 may be mated with the combustor bulkhead 64. The swirler guide wall 92, for example, may project axially into or through a respective port in the combustor bulkhead 64. The swirler assembly 66 may also be mounted to the combustor bulkhead 64. For example, the swirler segment 80 (e.g., the second swirler wall 90 and/or the swirler guide wall 92 of FIG. 3) may be bonded (e.g., brazed or welded) and/or otherwise connected to the combustor bulkhead 64 and, more particularly, a shell 106 of the combustor bulkhead 64. However, various other techniques are known in the art for mounting a swirler assembly to a combustor bulkhead (or various other combustor components), and the present disclosure is not limited to any particular ones thereof.

The fuel injector 68 of FIG. 2 includes a fuel injector stem 108 and a fuel injector nozzle 110. The injector stem 108 is configured to support and route fuel to the injector nozzle 110. The injector nozzle 110 is cantilevered from the injector stem 108. The injector nozzle 110 projects along the axis 72 (e.g., a centerline of the injector nozzle 110) partially into the inner bore of the swirler assembly 66. A tip 112 of the injector nozzle 110 is thereby disposed within the inner swirler passage 102. Here, the nozzle tip 112 is axially spaced from the inner swirler outlet 104 by an axial distance along the axis 72.

Referring to FIG. 3, the injector nozzle 110 is configured with one or more nozzle passages 114 and 116. The injector nozzle 110 of FIG. 3, for example, includes an inner nozzle wall 118, an outer nozzle wall 120 and a fuel swirler 122.

The inner nozzle wall 118 extends axially along the axis 72 to a (e.g., downstream) distal end 124 of the inner nozzle wall 118. This inner nozzle wall end 124 is axially recessed from the nozzle tip 112 along the axis 72 by an axial distance; however, in other embodiments the inner nozzle wall end 124 may be axially aligned with the nozzle tip 112 along the axis 72. The inner nozzle wall 118 extends radially between and to an inner side 126 of the inner nozzle wall 118 and an outer side 128 of the inner nozzle wall 118. The inner nozzle wall inner side 126 of FIG. 3 at least partially or completely forms an outer peripheral boundary of the inner nozzle passage 114; e.g., a central nozzle passage. The inner nozzle wall 118 may also form an inner nozzle outlet 130 (e.g., an outlet orifice) of the inner nozzle passage 114 at its distal end 124. The inner nozzle wall outer side 128 or FIG. 3 at least partially or completely forms an inner peripheral boundary of the outer nozzle passage 116. The inner nozzle wall 118 extends circumferentially around the axis 72 providing the inner nozzle wall 118 with a full-hoop (e.g., tubular) body. With this arrangement, the inner nozzle passage 114 may have a solid (e.g., non-annular) cross-sectional geometry axially along the inner nozzle wall 118 and to its inner nozzle outlet 130.

The outer nozzle wall 120 extends axially along the axis 72 to a (e.g., downstream) distal end 132 of the outer nozzle wall 120. This outer nozzle wall end 132 is axially aligned with the nozzle tip 112 along the axis 72. The outer nozzle wall 120 extends radially between and to an inner side 134 of the outer nozzle wall 120 and an outer side 136 of the outer nozzle wall 120. The outer nozzle wall inner side 134 of FIG. 3 at least partially or completely forms an outer peripheral boundary of the outer nozzle passage 116. The outer nozzle wall 120 may also form an outer nozzle outlet 138 (e.g., an outlet orifice) of the outer nozzle passage 116 at its distal end 132 / the nozzle tip 112. The outer nozzle wall outer side 136 of FIG. 3 may provide a bearing surface 140 for mating with the injector mount 70. The injector nozzle 110 and its outer nozzle wall 120 of FIG. 3, for example, project through a bore of the injector mount 70, and the injector mount 70 may radially engage (e.g., contact) and may be axially slidable along the outer nozzle wall 120. Of course, in other embodiments, it is contemplated a sleeve or other intermediate element may be arranged between the outer nozzle wall 120 and the injector mount 70. Referring again to FIG. 3, the outer nozzle wall 120 extends circumferentially around the axis 72 providing the outer nozzle wall 120 with a full-hoop (e.g., tubular) body.

The outer nozzle wall 120 is spaced radially outward from the inner nozzle wall 118. At least a (e.g., upstream) portion of the outer nozzle wall 120 axially overlaps and circumscribes the inner nozzle wall 118. With this arrangement, the outer nozzle passage 116 may have an annular cross-sectional geometry axially along the inner nozzle wall 118 and/or the outer nozzle wall 120. However, where the inner nozzle wall end 124 is axially recessed from the outer nozzle wall end 132 at the nozzle tip 112, a downstream portion of the outer nozzle passage 116 may have a solid (e.g., non-annular) cross-sectional geometry from the inner nozzle wall end 124 to the outer nozzle outlet 138.

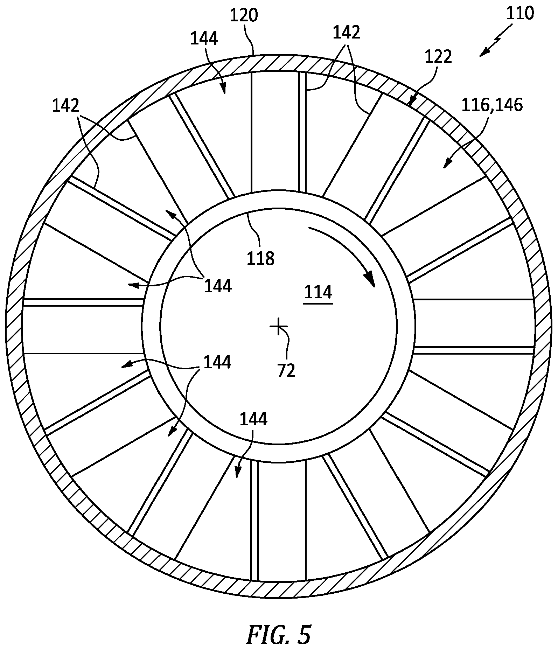

The fuel swirler 122 may be configured as an axial fuel swirler. The fuel swirler 122 of FIG. 3, for example, is arranged radially between and is connected to the inner nozzle wall 118 and the outer nozzle wall 120. The fuel swirler 122 of FIG. 5 includes a plurality of fuel swirler vanes 142. Each of these fuel swirler vanes 142 extends axially between and is connected to the inner nozzle wall 118 and the outer nozzle wall 120 (see also FIG. 3). The fuel swirler vanes 142 are arranged circumferentially about the axis 72 in a circular array. Each of the fuel swirler vanes 142 is circumferentially separated from each circumferentially neighboring (e.g., adjacent) fuel swirler vane 142 by a respective fuel swirler channel 144; e.g., a gap for flowing fuel. Each fuel swirler channel 144 extends circumferentially between and to a respective circumferentially neighboring pair of the fuel swirler vanes 142. Each fuel swirler channel 144 extends radially between and to the inner nozzle wall 118 and the outer nozzle wall 120. With this arrangement, the fuel swirler channels 144 collectively form a fuel swirler passage 146 axially through the fuel swirler 122, radially between the nozzle walls 118 and 120. The fuel swirler vanes 142 and/or the fuel swirler channels 144 are configured such that fuel passing through and out of the fuel swirler passage 146 is directed in the first circumferential direction (e.g., the clockwise direction, or alternatively the counterclockwise direction) about the axis 72 - the same direction as the air swirled by the air swirler 88 of FIG. 4. In other words, the fuel swirler vanes 142 / the fuel swirler channels 144 are operable to circumferentially swirl the fuel passing through the fuel swirler 122 in the first circumferential direction.

During operation of the fuel injector assembly 62 of FIG. 3, air (e.g., the compressed core air from the HPC section of FIG. 1) is directed into the air swirler passage 98. This air flows radially through the air swirler passage 98 and into the inner swirler passage 102. As the air passes through the air swirler 88 and its air swirler passage 98, the air is swirled in the first circumferential direction (see FIG. 4). The air directed through the air swirler 88 into the inner swirler passage 102 is therefore (or otherwise includes) swirled air. This swirled air is directed axially through the inner swirler passage 102 and is discharged from the swirler assembly 66 through the inner swirler outlet 104. The swirler assembly 66 may thereby inject the swirled air as an annular air flow of the swirled air along the axis 72 into the combustion chamber 58.

Fuel is directed into the outer nozzle passage 116 and flows axially through the fuel swirler passage 146. As the outer passage fuel passes through the fuel swirler 122 and its fuel swirler passage 146, the fuel is swirled in the first circumferential direction (see FIG. 5). The outer passage fuel directed through and discharged from the fuel swirler 122 is therefore (or otherwise includes) swirled fuel. This swirled fuel is directed axially through a remainder of the outer nozzle passage 116 and is discharged from the injector nozzle 110 through the outer nozzle outlet 138. The injector nozzle 110 may thereby inject the swirled fuel as an annular fuel flow of the swirled fuel along the axis 72 into the combustion chamber 58.

In general, the annular fuel flow is radially inboard of and radially adjacent (and in contact with) the annular air flow. The annular air flow may thereby (e.g., at least substantially) circumscribe the annular fuel flow. Of course, some of the swirled air and some of the swirled fuel may begin to mix together as soon as the swirled fuel enters the inner swirler passage 102. However, this mixing (at least proximate the nozzle tip 112 and/or within the inner swirler passage 102) may be relatively low turbulence mixing since both the swirled air and the swirled fuel are swirled in the common first circumferential direction (see FIGS. 4 and 5). The mixing between the swirled air and the swirled fuel may thereby be pushed further downstream into the combustion chamber 58. In other words, the swirled air and the swirled fuel may penetrate further downstream into the combustion chamber 58 before substantial mixing occurs. Delaying the mixing between the swirled air and the swirled fuel may reduce likelihood of flashback and/or flame holding on the injector nozzle 110 due to reduced turbulent flame speed. This may be particularly useful where the fuel is a hydrogen fuel (e.g., gaseous hydrogen) with a relatively fast burn speed as compared to traditional hydrocarbon fuel such as kerosene and jet fuel. However, the swirling of the air and the fuel may still facilitate (e.g., substantially complete) mixing and burning of the air and the fuel within the combustion chamber 58 by generating a separation zone to provide flame anchoring, stable burning and/or improved mixing.

Mixing turbulence may be further reduced by matching a swirl trajectory of the swirled air with a swirl trajectory of the swirled fuel at the nozzle tip 112. For example, at the nozzle tip 112, a flow trajectory of the swirled air and a flow trajectory of the swirled fuel may have common (e.g., equal) axial and/or circumferential components. The mixing turbulence may also or alternatively be reduced by further matching a swirl velocity of the swirled air with a swirl velocity of the swirled fuel at the nozzle tip 112. For example, at the nozzle tip 112, a flow velocity of the swirled air and a flow velocity of the swirled fuel may be within at least thirty percent (30%)) axial and/or circumferential components. The mixing turbulence may still also or alternatively be reduced by further matching a swirl momentum of the swirled air with a swirl momentum of the swirled fuel at the nozzle tip 112. For example, at the nozzle tip 112, a momentum of the swirled air and a momentum of the swirled fuel may have common (e.g., equal) or similar (e.g., within at least five percent (5%)) axial and/or circumferential components.

Referring still to FIG. 3, fuel is also directed into the inner nozzle passage 114. This inner passage fuel flows through the inner nozzle passage 114 and is discharged from the injector nozzle 110 through the inner nozzle outlet 130 (and the downstream portion of the outer nozzle passage 116). The injector nozzle 110 may thereby inject the inner passage fuel (e.g., without swirl) into the combustion chamber 58 through the inner swirler passage 102 as, for example, a solid stream (e.g., non-annular jet) of the inner passage fuel. The quantity and speed of this inner passage fuel may be tailored to reduce likelihood of flashback into the swirler assembly 66 and/or the injector nozzle 110.

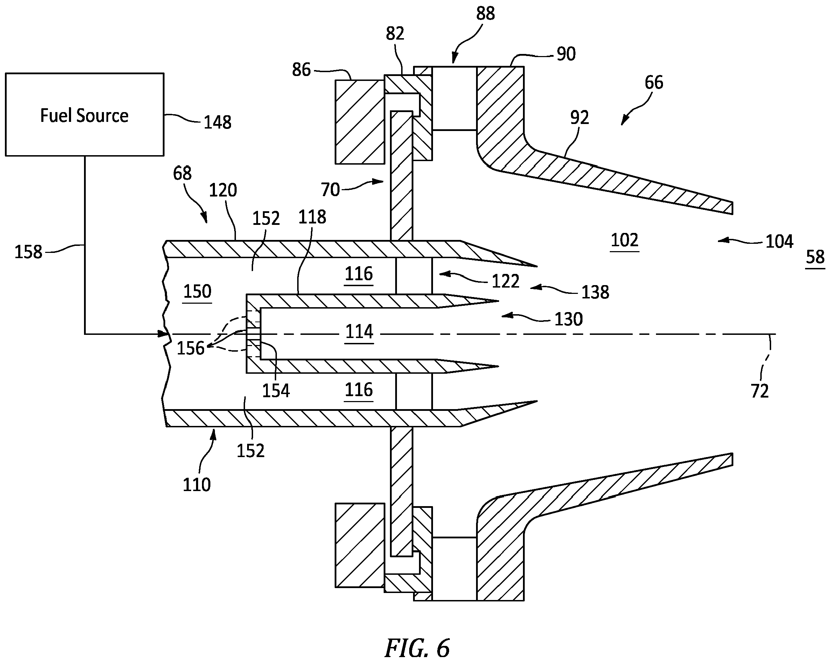

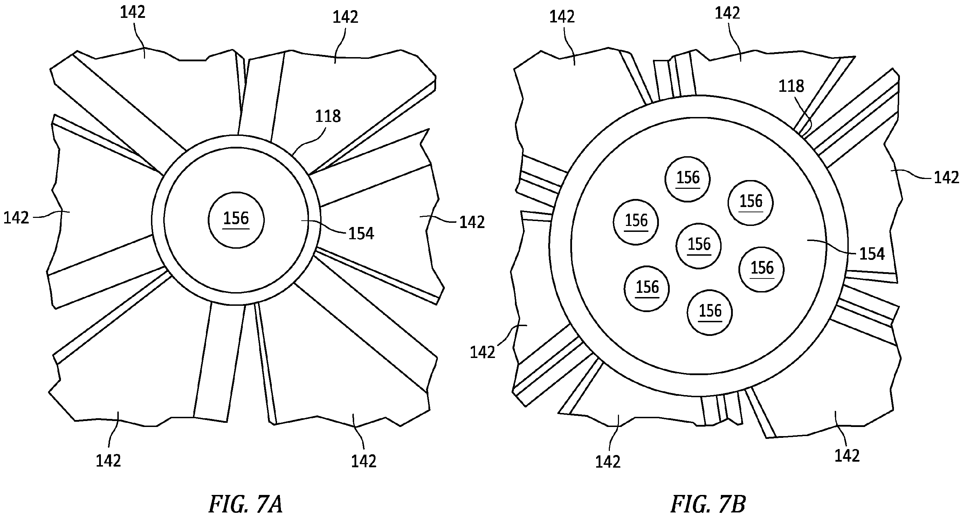

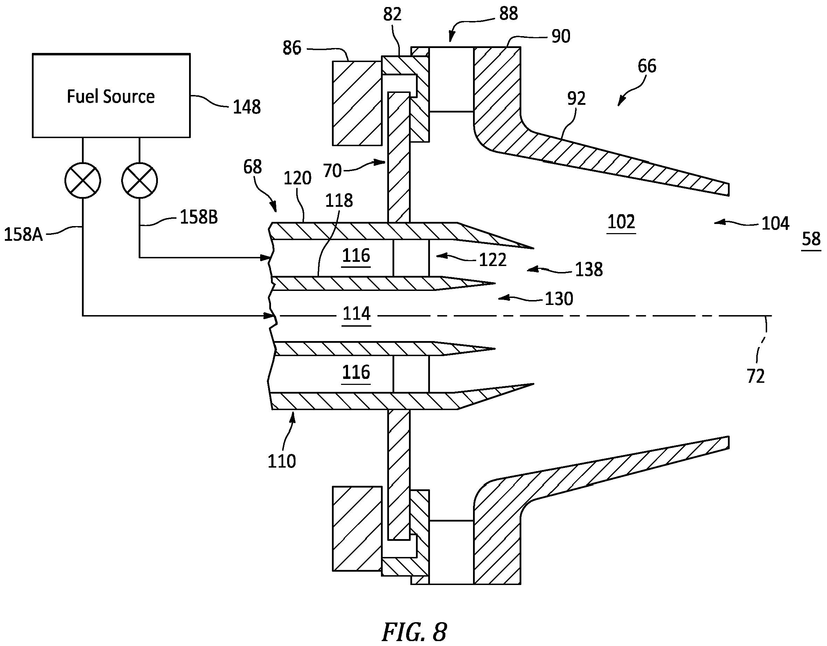

In some embodiments, referring to FIG. 6, the inner nozzle passage 114 and the outer nozzle passage 116 may receive the fuel from a common fuel source 148. The injector nozzle 110 of FIG. 8, for example, includes a manifold passage 150; e.g., a fuel distribution passage. This manifold passage 150 is arranged upstream of and fluidly coupled with (e.g., in parallel) the inner nozzle passage 114 and the outer nozzle passage 116. The manifold passage 150 of FIG. 6, for example, is formed by an inner bore of the outer nozzle wall 120. This manifold passage 150 extends axially within the injector nozzle 110 to an annular inlet 152 of the outer nozzle passage 116. The manifold passage 150 also extends axially within the injector nozzle 110 to a center body endwall 154 capping off an inner bore of the inner nozzle wall 118. The endwall 154 of FIG. 6, in particular, is connected to the inner nozzle wall 118 at an upstream end of the inner nozzle passage 114. This endwall 154 includes one or more perforations 156 (see also FIGS. 7A and 7B), where each perforation 156 extends axially through the endwall 154. The perforation(s) 156 in the endwall 154 may thereby fluidly couple the manifold passage 150 to the inner nozzle passage 114. The quantity and size of the perforation(s) 156 may be selected to tailor the speed and quantity of the inner passage fuel injected by the injector nozzle 110. The endwall 154 and its perforation(s) 156 may thereby form a (e.g., fixed) flow regulator for the inner nozzle passage 114. Of course, various other types and configurations of flow regulators are known in the art, and the present disclosure is not limited to any particular ones thereof.

With the arrangement of FIG. 6, a single fuel circuit 158 may fluidly couple the fuel source 148 (e.g., a hydrogen fuel source) to each of the fuel passages 114, 116 within the injector nozzle 110. The fuel circuit 158 of FIG. 6, for example, fluidly couples the fuel source 148 to the manifold passage 150, which manifold passage 150 is fluidly coupled to the inner nozzle passage 114 and the outer nozzle passage 116. In other embodiments however, referring to FIG. 8, each nozzle passage 114, 116 may be fluidly coupled to the fuel source 148 (or separate fuel sources) through a discrete fuel circuit 158A, 158B (generally referred to as "158"). With such an arrangement, fuel flow through each fuel circuit 158 may be adjusted to individually tailor the speed and quantity of the inner passage fuel and the outer passage fuel injected by the injector nozzle 110.

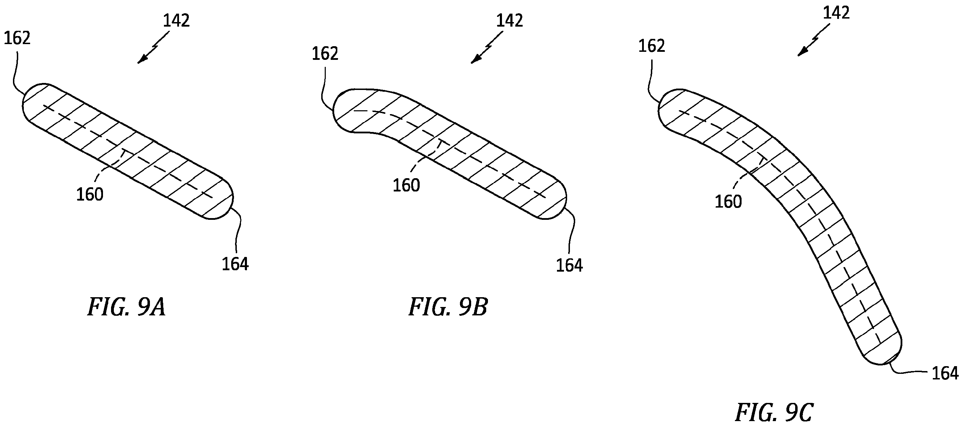

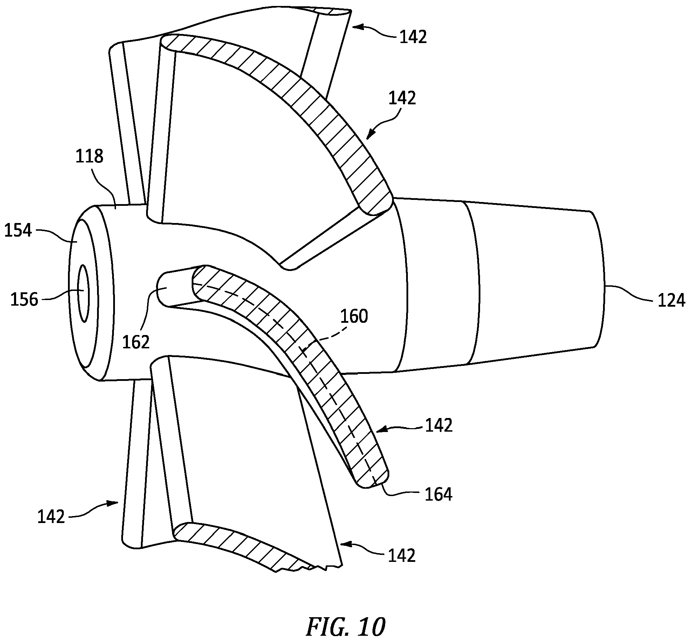

Referring to FIGS. 9A-C, each of the fuel swirler vanes 142 has a camber line 160 extending from a leading edge 162 of that fuel swirler vane 142 to a trailing edge 164 of that fuel swirler vane 142. In some embodiments, referring to FIG. 9A, the camber line 160 of one, some or all of the fuel swirler vanes 142 may be straight from the leading edge 162 to the trailing edge 164. In other embodiments, referring to FIGS. 9B and 9C, the camber line 160 of one, some or all of the fuel swirler vanes 142 may be non-straight from the leading edge 162 to the trailing edge 164. For example, at least a portion or an entirety of the camber line 160 may be curved; e.g., arcuate, splined, etc. In some embodiments, referring to FIG. 10, one or more or all of the fuel swirler vanes 142 may also be configured as a helical vane.

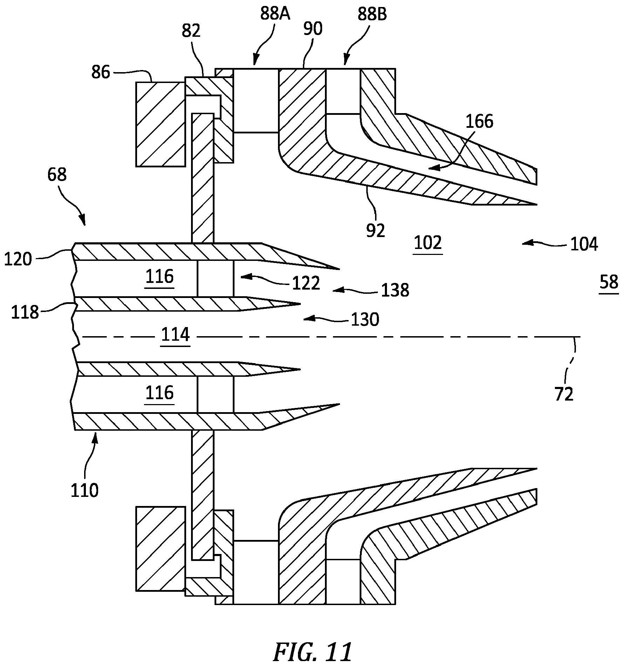

In some embodiments, referring to FIG. 3, the swirler assembly 66 may be configured with a single air swirler 88. In other embodiments, referring to FIG. 11, the air swirler may alternatively be one of a plurality of air swirlers 88A and 88B (generally referred to as "88"). In the embodiment of FIG. 11, the second air swirler 88B may directed swirled air into an outer swirler passage 166 that circumscribes and extends along the swirler guide wall 92. It is contemplated this second air swirler 88B may swirl the air in the first circumferential direction (e.g., a common direction as the first air swirler 88A), or in a second circumferential direction about the axis 72 that is opposite the first circumferential direction.

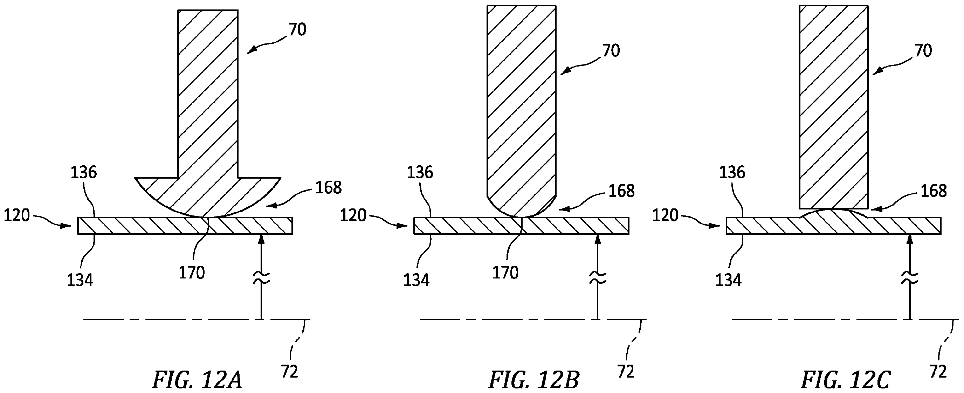

In some embodiments, referring to FIGS. 12A and 12B, the injector mount 70 may be configured with a foot 168 to facilitate axial movement between the injector mount 70 and the bearing surface 140. This foot 168 may include a surface 170 with a curved (e.g., arcuate) or otherwise eased sectional geometry when viewed, for example, in a reference plane including or otherwise parallel with the axis 72. In other embodiments, referring to FIG. 12C, the foot 168 may be configured with the outer nozzle wall 120.

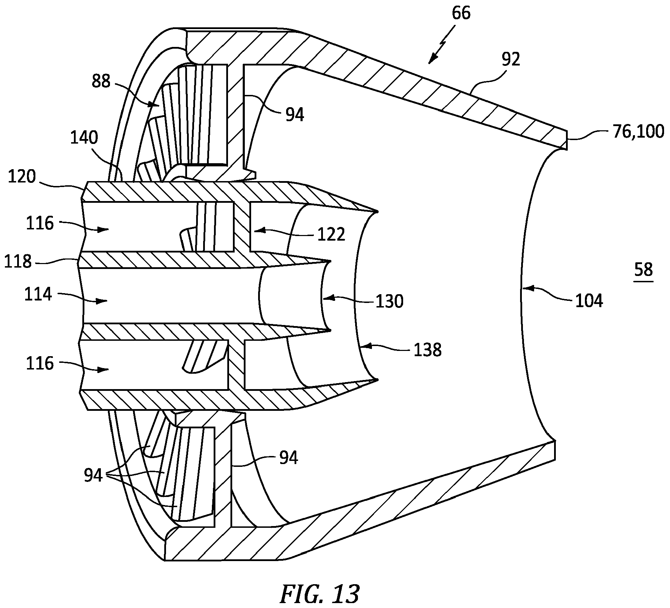

In some embodiments, referring to FIGS. 3 and 11, each air swirler 88 may be configured as a radial air swirler. However, in other embodiments, it is contemplated any one or more of the air swirlers 88 may alternatively be configured as an axial air swirler; e.g., see FIG. 13.

The fuel injectors 68 are described above as injecting a non-hydrocarbon fuel such as hydrogen fuel. It is contemplated, however, that these fuel injectors 68 may alternatively be utilized for injecting hydrocarbon fuel.

The fuel injector assembly(ies) 62 may be included in various gas turbine engines other than the one described above. The fuel injector assembly(ies) 62, for example, may be included in a geared gas turbine engine where a gear train connects one or more shafts to one or more rotors in a fan section, a compressor section and/or any other engine section. Alternatively, the fuel injector assembly(ies) 62 may be included in a direct drive gas turbine engine configured without a gear train. The fuel injector assembly(ies) 62 may be included in a gas turbine engine configured with a single spool, with two spools (e.g., see FIG. 1), or with more than two spools. The gas turbine engine may be configured as a turbofan engine, a turbojet engine, a turboprop engine, a turboshaft engine, a propfan engine, a pusher fan engine or any other type of turbine engine. The gas turbine engine may alternatively be configured as an auxiliary power unit (APU) or an industrial gas turbine engine. The present disclosure therefore is not limited to any particular types or configurations of turbine engines.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for a gas turbine engine (20), comprising:
a fuel injector assembly (62) including a fuel swirler (122) and an air swirler (88);
the fuel swirler (122) configured to swirl fuel in a direction about the axis (72) to provide swirled fuel, and the fuel injector assembly (62) configured to inject the swirled fuel as an annular fuel flow along an axis (72); and
the air swirler (88) configured to swirl air in the direction about the axis (72) to provide swirled air, and the fuel injector assembly (62) configured to inject the swirled air as an annular air flow along the axis (72), adjacent and circumscribing the annular fuel flow.

2. The assembly of claim 1, wherein the fuel injector assembly (62) is configured such that a swirl trajectory of the swirled fuel in the annular fuel flow matches a swirl trajectory of the swirled air in the annular air flow.

3. The assembly of claim 1 or 2, wherein:
the fuel swirler (122) comprises an axial fuel swirler; and/or
the air swirler (88) comprises a radial air swirler..

4. The assembly of any preceding claim, wherein
the fuel injector assembly (62) further includes an inner nozzle wall (118) and an outer nozzle wall (120) circumscribing the inner nozzle wall (118); and
the fuel swirler (122) includes a plurality of fuel swirler vanes (142) arranged circumferentially about the axis (72), and each of the plurality of fuel swirler vanes (142) extends radially from the inner nozzle wall (118) to the outer nozzle wall (120), optionally wherein:
a camber line (160) of a first of the plurality of fuel swirler vanes (142) is straight; or
at least a portion of a camber line (160) of a first of the plurality of fuel swirler vanes (142) is curved.

5. The assembly of any preceding claim, wherein
the fuel injector assembly (62) further includes a first swirler wall (82) and a second swirler wall (90); and
the air swirler (88) includes a plurality of air swirler vanes (94) arranged circumferentially about the axis (72), and each of the plurality of air swirler vanes (94) extends axially from the first swirler wall (82) to the second swirler wall (90).

6. The assembly of any preceding claim, wherein
the fuel injector assembly (62) is further configured to inject a second fuel flow along the axis (72); and
the annular fuel flow is adjacent and circumscribes the second fuel flow.

7. The assembly of any preceding claim, wherein
the fuel injector assembly (62) further includes an inner nozzle passage (114), an outer nozzle passage (116), an inner nozzle wall (118) and an outer nozzle wall (120) circumscribing the inner nozzle wall (118);
the inner nozzle passage (114) is radially within the inner nozzle wall (118), and the inner nozzle passage (114) extends axially along the inner nozzle wall (118) to an inner nozzle outlet (130);
the outer nozzle passage (116) is radially between the inner nozzle wall (118) and the outer nozzle wall (120), and the outer nozzle passage (116) extends axially along the inner nozzle wall (118) and the outer nozzle wall (120), through the fuel swirler (122), to an outer nozzle outlet (138).

8. The assembly of claim 7, wherein:
a distal end (124) of the inner nozzle wall (118) is axially recessed from a distal end (132) of the outer nozzle wall (120); and/or
the fuel injector assembly (62) further includes a flow regulator (154) at an upstream end (74) of the inner nozzle passage (114).

9. The assembly of claim 7 or 8, wherein
the fuel injector assembly (62) further includes an endwall (154) connected to the inner nozzle wall (118) at an upstream end (74) of the inner nozzle passage (114); and
the endwall (154) includes one or more perforations (156) fluidly coupled to the inner nozzle passage (114).

10. The assembly of any preceding claim, further comprising a hydrogen fuel source (148) configured to provide the fuel to the fuel injector assembly (62) such that the fuel swirled by the fuel swirler (122) is hydrogen fuel.

11. An apparatus for a gas turbine engine (20), comprising:
a fuel injector nozzle (110) including an inner nozzle passage (114), an outer nozzle passage (116) and a fuel swirler (122) within the outer nozzle passage (116);
the inner nozzle passage (114) extending along an axis (72) to an inner nozzle outlet (130) at a distal end of the fuel injector nozzle (110), and the fuel injector nozzle (110) configured to direct inner fuel out of the inner nozzle passage (114) through the inner nozzle outlet (130) as an inner fuel flow along the axis (72);
the outer nozzle passage (116) extending along the axis (72) to an outer nozzle outlet (138) at the distal end of the fuel injector nozzle (110), and the fuel injector nozzle (110) configured to direct outer fuel swirled by the fuel swirler (122) out of the outer nozzle passage (116) through the outer nozzle outlet (138) as an outer fuel flow along the axis (72), adjacent and circumscribing the inner fuel flow.

12. The apparatus of claim 11, further comprising:
a fuel injector assembly (62) including the fuel injector nozzle (110) and an air swirler (88);
the fuel swirler (122) configured to swirl fuel in a direction about the axis (72) within the outer nozzle passage (116); and
the air swirler (88) configured to swirl air in the direction about the axis (72) to provide swirled air, and the fuel injector assembly (62) configured to inject the swirled air as an air flow along the axis (72), adjacent and circumscribing the outer fuel flow.

13. The apparatus of claim 11 or 12, wherein
the fuel injector nozzle (110) further includes an inner nozzle wall (118) and an outer nozzle wall (120) circumscribing the inner nozzle wall (118);
the inner nozzle wall (118) forms an outer peripheral boundary of the inner nozzle passage (114) to the inner nozzle outlet (130), and the inner nozzle wall (118) forms an inner peripheral boundary of the outer nozzle passage (116);
the outer nozzle wall (120) forms an outer peripheral boundary of the outer nozzle passage (116) to the outer nozzle outlet (138); and
the fuel swirler (122) includes a plurality of fuel swirler vanes (142) arranged circumferentially about the axis (72), and each of the plurality of fuel swirler vanes (142) extends radially across outer nozzle passage (116), optionally wherein:
the fuel injector nozzle (110) further includes a fuel manifold passage (150) and an endwall (154) between the fuel manifold passage (150) and the inner nozzle passage (114); and
one or more perforations (156) extend axially through the endwall (154) fluidly coupling the fuel manifold passage (150) to the inner nozzle passage (114).

14. A method for operating a combustor (60) assembly of a gas turbine engine (20), comprising:
swirling fuel in a direction about an axis (72) to provide swirled fuel;
injecting the swirled fuel into a combustion chamber (58) as an annular fuel flow along the axis (72);
swirling air in the direction about the axis (72) to provide swirled air; and
injecting the swirled air into the combustion chamber (58) as an annular air flow along the axis (72), wherein the annular air flow is adjacent and radially outboard of the annular fuel flow.

15. The method of claim 14, wherein at least one of
a swirl trajectory of the swirled fuel in the annular fuel flow matches a swirl trajectory of the swirled air in the annular air flow; or
a swirl velocity of the swirled fuel in the annular fuel flow is within at least thirty percent of a swirl velocity of the swirled air in the annular air flow.
